# EUROPEAN PATENT SPECIFICATION

(11) **EP 0 652 397 B1**
(45) Date of publication and mention of the grant of the patent: **29.12.1999**
(21) Application number: 94117407.0
(22) Date of filing: 04.11.1994
(51) Int. Cl.: F16L 47/02, F16L 33/02, B29C 45/26

(54) **A connector device, and method and apparatus for its manufacture**
Anschlussvorrichtung, Verfahren und Gerät zu deren Herstellung
Dispositif de raccordement, procédé et appareil pour sa fabrication

(30) Priority: 09.11.1993 IT TO930846
(43) Date of publication of application: 10.05.1995
(73) Proprietor: BTR SAIAG SEALING SYSTEMS S.p.A., 10073 Ciriè (Torino) (IT)
(72) Inventor: Mogavero, Cesare, I-10073 Cirie' (Torino) (IT)
(74) Representative: Gerbino, Angelo

(56) References cited:
- EP-A- 0 440 890
- EP-A- 0 631 080
- FR-A- 1 420 046
- FR-A- 2 240 401
- GB-A- 1 129 049
- JP-A- 53 027 667
- US-A- 2 726 682

## Description

The present invention relates to a connector device for fluid circuits, and to an apparatus and a method for its manufacture.

Such a device is used in particular in the cooling circuit of an internal combustion engine and includes a tube of elastomeric material and at least one annular clamping member provided with means enabling the diameter of the member to be varied.

During the mounting of prior art devices of the type described above, once one end of the tube has been fitted onto the union of another component of the circuit, the clamping ember is fitted around this end of the tube and then tightened, so as to avoid any leakage of fluid between the tube and the union.

In the prior art, such operations are carried out by conveying tubes and clamping members separately to an assembly station and then joining them together, thus incurring appreciable storage and assembly costs.

EP-A-631 080 (which is a prior art document under Art. 54(3) (4) EPC) discloses a connector device for a fluid circuit, including a tube with a circumferential groove in its outer surface adjacent at least one end portion and a clamping member to be positioned in the groove.

A pin protrudes from a portion of the bottom of the groove and the clamping member is provided with a hole, so that the clamping member is retained, even in its loose state, in the groove by the engagement between the pin and the hole. The provision of the pin and the hole is however expensive.

In order to overcome these disadvantages, the subject of the present invention is a device of the type described at the beginning of the present description and characterised in that the tube has a circumferential groove in its outer surface adjacent at least one end portion, and in that, even in its loose state, the diameter of the annular portion of the clamping member is slightly smaller than that of the portions of the tube adjacent the groove, into which the annular portion of the clamping member can be inserted, thus determining the axial position of the clamping member relative to the tube.

The device according to the invention can thus be stored and subsequently conveyed to an assembly station as a single, pre-assembled item, in which the annular portion of the clamping member is loose in the groove in the tube.

In this way a correct axial positioning of the clamping member on the tube is ensured, avoiding that the person responsible for mounting the tube onto the union and tightening the clamping member should either waste time having to rectify the position of the clamp or mount the member incorrectly, for example with the plane defined by the annular member not perpendicular to the axis of the tube.

A further aspect of the present invention is an apparatus according to the appended claim 5.

An additional aspect of the present invention is a method according to the appended claim 13.

Additional advantages and characteristics of the present invention will become apparent from the detailed description which follows and which refers to the appended drawings, provided purely by way of non-limitative example, in which
Figure 1 is a perspective view of the device of the invention, mounted in the cooling circuit of the internal combustion engine of a motor car,
Figure 2 is a view on an enlarged scale of the device of the invention taken apart and with the tube in cross-section,
Figures 2a and 2b show a clamping member used in the device of the invention in its loose state and in its clamped state respectively,
Figures 3 and 4 are similar views to Figure 2, of alternative embodiments of the device of the invention,
Figure 5 is a perspective view of the apparatus for the manufacture of a tube forming part of the device according to the invention,
Figure 6 is an exploded perspective view of the apparatus of Figure 5,
Figure 7 is an enlarged perspective view of a detail of the apparatus of the preceding drawings, and
Figure 8 is a cross-section taken on the line VIII-VIII of Figure 5.

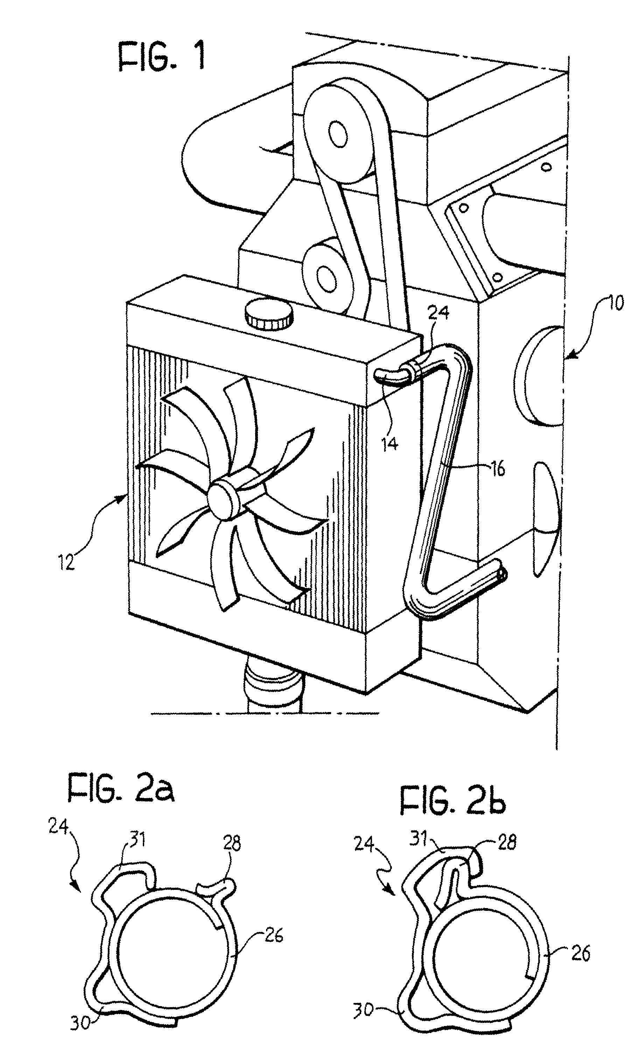

A cooling circuit of an internal combustion engine 10 (Figure 1) of a motor car includes a radiator 12, onto one union 14 of which is fitted a cylindrical tube 16 of elastomeric material which possibly incorporates strengthening materials.

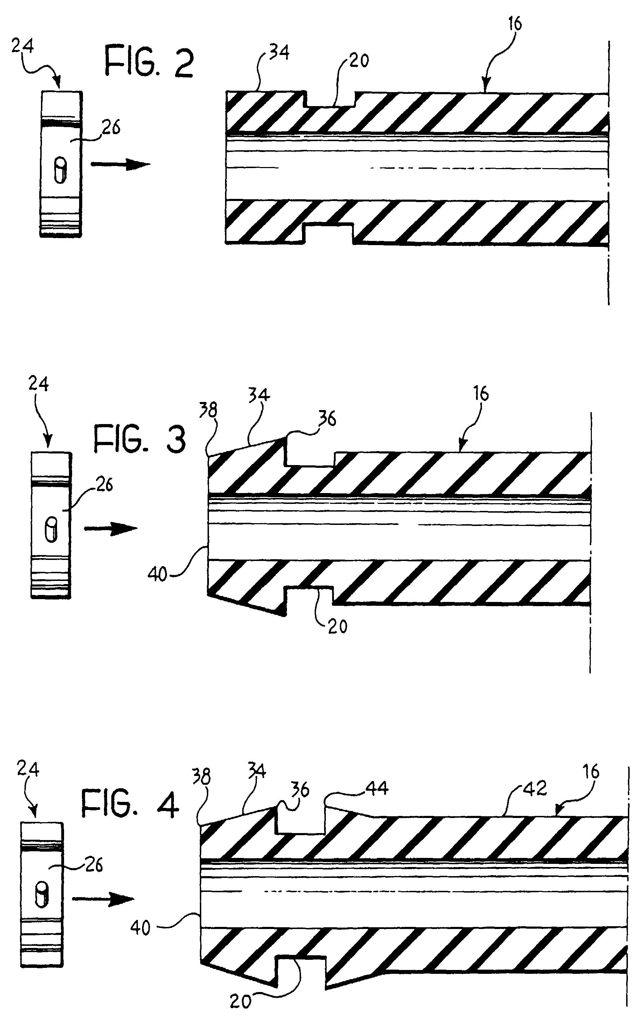

The tube 16 (Figure 2) has a circumferential groove 20 in its outer surface adjacent an end portion 34.

A clamping member 24 having an annular portion 26, may be fitted into this groove and is provided with known loosening/tightening means for varying the diameter of the annulus 26.

These loosening/tightening means include for example (Figures 2a and 2b a projection 28 which projects radially from the outside of the annulus 26 and a tongue 30 having one end fixed to the annulus 26 and a free end 31 shaped like a hook.

In Figure 2a, the clamping member 24 is shown in its loose state, with the end 31 of the tongue 30 disengaged from the projection 28, while in Figure 2b the member 24 is shown in its clamped state, with the end 31 of the tongue 30 engaging the projection 28, thereby decreasing the diameter of the annulus 26.

Even in its loose state, the diameter of the annulus 26 of the clamping member 24 is slightly smaller than that of the tube 16.

The clamping member 24 can therefore be forced to slide onto the end portion 34 of the tube 16, thanks to the resilient deformability of this latter, and fitted into the groove 20 where it is held and prevented from disengaging.

In this way the desired axial position of the clamping member 24 along the tube 16 is ensured and the general plane of the member is prevented from shifting from its position substantially perpendicular to the axis of the tube 16.

It is therefore possible to store the tube 16 and the clamping member 24 as a single unit by fitting the loose clamping member 24 into the groove 20 where it will remain joined to the tube 16.

The task of the person working at the assembly station - where the tube 16 is fitted onto the union 14 and the clamping member 24 is tightened around the tube 16 - is therefore made easier as he can work with preassembled parts.

Figure 3 shows an alternative configuration of the device of the invention, in which the same numbers as those previously used indicate the same or equivalent parts.

In this case the end portion 34 of the tube 16, adjacent the groove 20, is shaped like a truncated cone, the larger base 36 of which faces the groove 20 and the smaller base 38 of which is formed with the mouth 40 of the tube 16. The diameter of the larger base 36 is greater than the diameter of the annulus 26 of the clamping member 24 in its loose state, while the diameter of the smaller base 38 is smaller than the diameter of the annulus 26.

This shaping of the end portion 34 of the tube 16 further facilitates the fitting of the loose clamping member 24 into the groove 20 and obstructs movement of the clamping member 24 out of the groove 20 towards the mouth 40 of the tube 16 once it has been fitted into the groove.

Figure 4 shows a further alternative configuration of the device of the invention, in which the same numbers as those previously used indicate the same or equivalent parts.

In this case - in addition to the characteristics indicated with reference to Figure 3 - the tube 16 has the additional characteristic of having its intermediate portion 42, immediately adjacent the groove 20, shaped like a truncated cone, the larger base 44 of which faces the groove 20 and has a larger diameter than that of the annulus 26 of the clamping member 24 in its loose state.

This shaping of the tube 16 further impedes movement of the clamping member 24 out of the groove 20, once it has been fitted there, both away from the mouth 40 of the tube 16 and towards it.

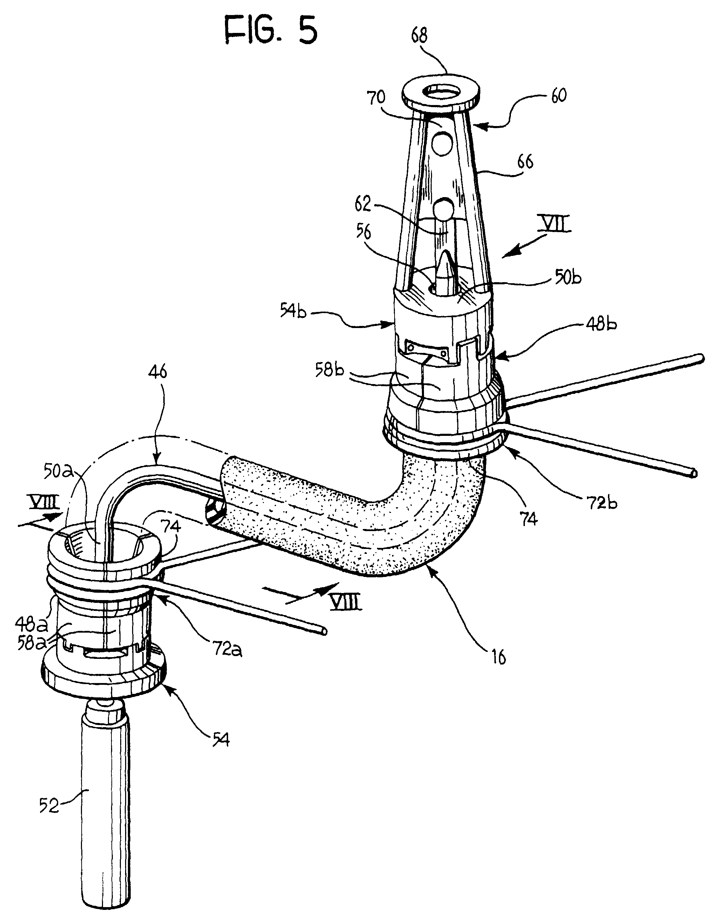

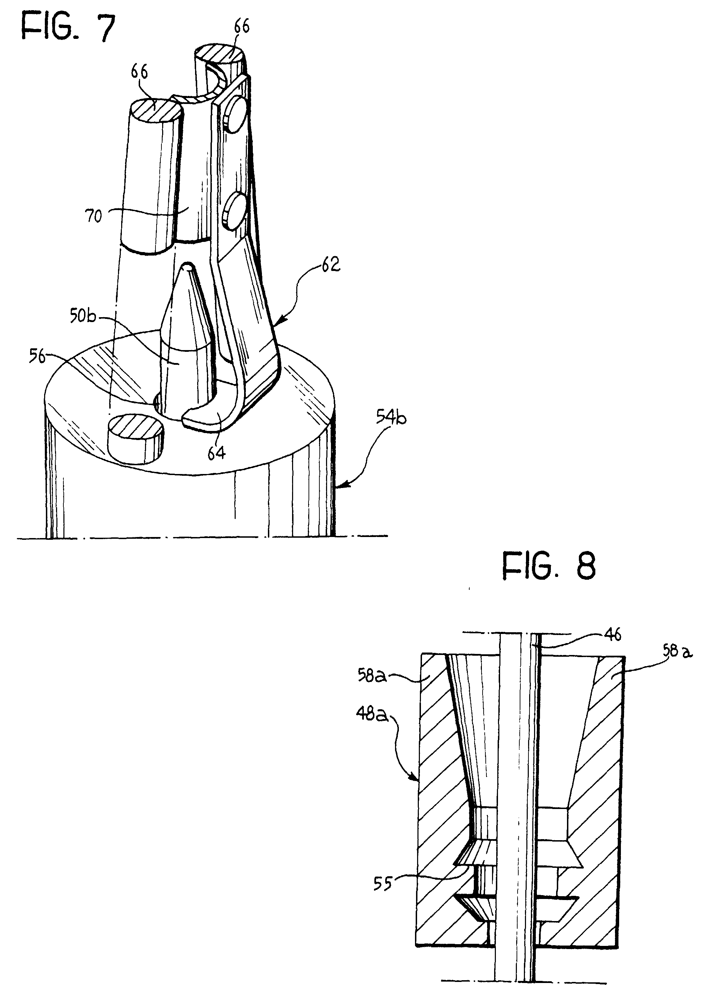

Figures 5 and 8 show an apparatus for the manufacture of a tube 16 having both end portions 34 shaped as in Figure 4.

This apparatus includes a shaped core 46, around which the unfinished tube 16 can be fitted coaxially, and first and second moulds 48a, 48b for positioning coaxially around the outside of respective end portions 50a, 50b of the core 46 encased by the tube 16 and which reproduce in reverse 55 the desired profile of the outer surface of the respective end portion 34 of the tube 16 (Figure 8).

The moulds 48a, 48b are tubular with a circular cross-section, the diameter of which varies along the longitudinal axis of the mould 48.

As will become clearer from the remaining description, by using moulds with a different internal shape it is possible to produce tubes with end portions having different outer shapes, for example those illustrated in Figures 2 and 3.

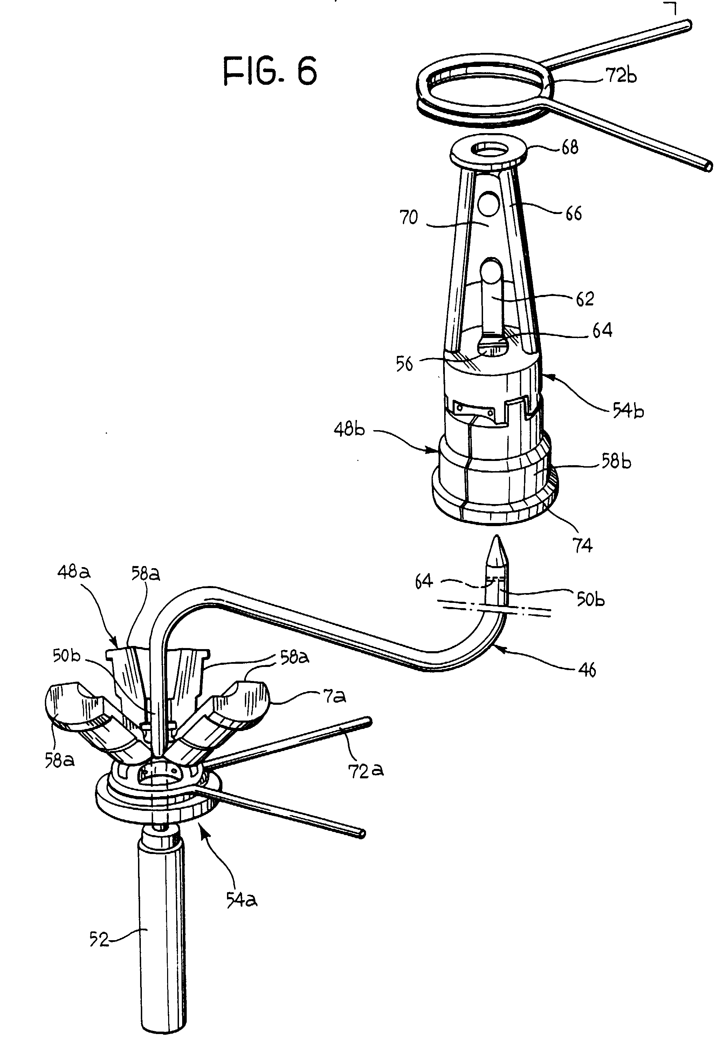

A handle 52 projects longitudinally (Figures 5 and 6) from the end 50a of the core 46 and a first annular support element 54a for the first mould is securely fixed coaxially to this handle.

The second mould 48b, on the other hand, is not fixed to the core 46 but is supported by a second annular support element 54b which has a central hole 56 provided to enable the core 46 to slide within it.

Both moulds 48a, 48b are formed by respective pluralities of petal-like components 58a, 58b which are pivoted at one end on the respective annular element 54a, 54b.

The petal-like components 58 are therefore able to pivot between an open configuration, in which they diverge and are inclined to the core 46, and a closed configuration in which they lie side by side round the core 46, each occupying a respective sector of an annular body.

A frame 60 (Figure 7) projects from the end of the second support element 54b opposite that on which the petal-like components 58b are pivoted and a first end of a resilient blade 62 is fixed thereto.

The opposite end of the blade 62 is formed as a tongue 64 which projects over the central hole 56 and is adapted to engage a slot 64 (Figure 6) of corresponding dimensions formed in the end 50b of the core 46 which may be associated with the second mould 48b.

The frame 60 includes a pair of diametrically opposed bars 66 fixed at one end to the second annular element 54b and at the other to a ring 68. The portions of the bars 66 adjacent the ring 68 are also interconnected by a plate 70 to which the strip 62 is fixed.

The equipment also includes respective clips 72a, 72b (Figures 5 and 6) for holding together the distal ends of the petal-like components 58a, 58b of each mould 48a, 48b.

These clips 72a, 72b are shaped like an impacted-coil spring with end portions projecting radially so that they can be gripped and tightened or released.

The distal ends of the petal-like components 58a, 58b have respective circumferential projections 74 which, in the closed configuration of the mould, form a continuous retaining ring for the respective clip 72a, 72b.

The method is now described for manufacturing a tube 16 having both end portions 34 shaped as shown in Figure 4 by the use of the apparatus illustrated in Figures 5 to 8.

The tube 16, still unfinished and cylindrical along its entire length, is fitted around the core 46, with the petal-like components 58a of the first mould 48a in the open configuration shown in Figure 6. The petal-like components 58a are then closed and held in the closed configuration (Figure 5) by the clip 72a so as to enclose the end 50a of the core 46 encased by the tube 16.

The second mould 48b is next positioned coaxially around the other end 50b of the core 46 with its petal-like components 58b open and then these are closed with the assistance of the clip 72b so as to enclose the end 50b.

The engagement of the tongue 64 of the blade 62 and the slot 64 in the end 50b of the core 46 enables the angular position of the second mould 48b to be determined accurately relative to the core 46, this being essential should the internal shape 55 of the moulds 48 not be symmetrical relative to the core 46.

The assembly formed by the two moulds 48a, 48b, the core 46 and the unfinished tube 16 is then placed in a vulcaniser which is not shown in the drawings.

As a result of vulcanisation, the tube 16 takes on the desired arcuate shape and the groove 20 and the frusto-cornical projections are formed in its end portions 34.

## Claims

1. A connector device for a fluid circuit, in particular for the cooling circuit of an internal combustion engine (10), including a tube (16) of elastomeric material and at least one clamping member (24) having an annular portion (26) and having loosening/tightening means (28, 30) for varying the diameter of the annular portion (26), the device being characterised in that the tube (16) has a circumferential groove (20) in its outer surface adjacent at least one end portion (34) and in that the diameter of the annular portion (26) of the clamping member (24), even in its loose state, is slightly smaller than that of the portions of the tube (16) adjacent the groove (20) into which the annular portion (26) of the clamping member (24) can be fitted thereby determining the axial position of the clamping member (24) relative to the tube (16).

2. A device according to Claim 1, characterised in that the end portion (34) of the tube (16) adjacent the groove (20) is shaped like a truncated cone with its larger base (36) facing the groove (20) and its smaller base (38) formed with the mouth (40) of the tube (16).

3. A device according to Claim 2, characterised in that the diameter of the larger base (36) is greater than the diameter of the annular portion (26) of the clamping member (24) in its loose state, while the diameter of the smaller base (38) is less than the diameter of the annular portion (26) of the clamping member (24) in its loose state.

4. A device according to either Claim 2 or Claim 3, characterised in that the intermediate portion (42) of the tube (16) immediately adjacent the groove (20) is shaped like a truncated cone, the larger base (44) of which faces the groove (20) and has a greater diameter than that of the annular portion (26) of the clamping member (24) in its loose state.

5. Apparatus for the manufacture of a tube (16) which forms part of the device of Claims 1 to 4 comprising also a clamping member (24), said apparatus including:
- a shaped core (46) around which the tube (16) may be fitted coaxially, and
- at least one mould (48) for positioning coaxially around the outside of one end (50) of the core (46) encased by the tube (16) and which reproduces in negative (55) the desired shape of the external surface of the tube (16), which has a circumferential groove (20) adjacent at least one end portion (34) thereof, the clamping member (24) being forced to slide onto the end portion (34) of the manufactured tube (16) thanks to the resilient deformability of this latter, and fitted into the groove (20) where it is held and prevented from disengaging, since the member (24) has, even in its loose state, a diameter slightly smaller than that of the portions of the tube (16) adjacent the groove,
said apparatus being characterised in that from a first end (50a) of the core (46) projects longitudinally a handle (52) to which is fixed coaxially a first annular support element (54a) of a first tubular mould (48a) having a circular cross-section and being positioned coaxially around the first end (50a) of the core (46).

6. Apparatus according to Claim 5, characterised in that the first mould (48a) is made up of a plurality of petal-like components (58a) pivoted at one end on the first annular element (54a), these components (58a) being pivotable between an open configuration, in which they diverge and are inclined to the core (46) and a closed configuration in which they lie side by side around the core (46), each occupying a respective sector of an annular body.

7. Apparatus according to either Claim 5 or Claim 6, characterised in that it includes a second mould (48b) for association with the end (50b) of the core (46) opposite to that from which the handle (52) projects, the second mould (48b) being made up of a plurality of petal-like components (58b) pivoted at one end on a second annular support element (54b) into which may be fitted the said opposite end (50b) of the core (46).

8. Apparatus according to Claim 7, characterised in that at the end of the second annular support element (54b) opposite that on which the petal-like components (58b) are pivoted, a frame (60) projects to which a first end of a resilient blade (62) is fixed, the other end being formed as a tongue (64) projecting over a central hole (56) in the second annular support element (54b) for engagement in a slot (64) of corresponding dimensions formed in the end (50b) of the core (46) which can be associated with the second mould (48b).

9. Apparatus according to Claim 8, characterised in that the frame (60) includes a pair of diametrically opposed bars (66) each fixed at one end to the second annular element (54b) and at the other to a ring (68), the portion of these bars (66) adjacent the ring (68) being interconnected by a plate (70) to which the blade (62) is fixed.

10. Apparatus according to any one of Claims 5 to 9, characterised in that it includes a clip (72) for holding together the distal ends of the petal-like components (58) of each mould (48).

11. Apparatus according to Claim 10, characterised in that each clip (72) is shaped like an impacted-coil spring with its ends projecting radially so as to enable gripping and loosening/tightening.

12. Apparatus according to Claim 11, characterised in that the distal ends of the petal-like components (58) have respective circumferential projections (74) which form a continuous retaining ring for the clip (72) when the mould (48) is in its closed configuration.

13. A method for the manufacture of a tube (16) which forms part of the device of Claims 1 to 4 comprising also a clamping member 24, characterised in that it includes the steps of:
- coaxially fitting the raw tube (16) around the core (46),
- coaxially clamping a respective mould (48) around the outside of at least one end (50) of the core (46) encased by the tube (16), said mould reproducing in negative (55) the desired shape of the external surface of the tube (16) to be manufactured, which has a circumferential groove (20) adjacent at least one end portion (34) thereof,
- placing the assembly formed by the core (46), the unfinished tube (16) and the mould (48) in a vulcaniser, and
- vulcanising the tube (16), the clamping member (24) being then forced to slide onto the end portion (34) of the tube (16) thanks to the resilient deformability of this latter, and fitted into the groove (20) where it is held and prevented from disengaging, since the member (24) has, even in its loose state, a diameter slightly smaller than that of the portions of the tube (16) adjacent the groove.

## Patentansprüche

1. Anschlußvorrichtung für einen Fluidkreislauf, insbesondere für den Kühlkreislauf eines Verbrennungsmotors (10), enthaltend einen Schlauch (16) aus elastomerem Material und zumindest ein Klemmelement (24) mit einem ringförmigen Abschnitt (26) und Lockerungs/Festspann-Vorrichtungen (28, 30) zum Variieren des Durchmessers des ringförmigen Abschnitts (26), wobei die Vorrichtung dadurch gekennzeichnet ist, daß der Schlauch (16) angrenzend an zumindest einen Endabschnitt (34) eine Umfangsnut (20) in seiner Außenfläche hat, und daß der Durchmesser des ringförmigen Abschnitts (26) des Klemmelements (24) auch im gelockerten Zustand etwas kleiner als jener der Abschnitte des Schlauchs (16) ist, welche an die Nut (20) angrenzen, in die der ringförmige Abschnitt (26) des Klemmelements (24) eingepaßt werden kann, wodurch die axiale Position des Klemmelements (24) relativ zum Schlauch (16) bestimmt wird.

2. Vorrichtung nach Anspruch 1, dadurch gekennzeichnet, daß der an die Nut (20) angrenzende Endabschnitt (34) des Schlauchs (16) die Gestalt eines Kegelstumpfs aufweist, wobei dessen größere Basis (36) der Nut (20) zugewandt und dessen kleinere Basis (38) mit der Mündung (40) des Schlauchs (16) geformt ist.

3. Vorrichtung nach Anspruch 2, dadurch gekennzeichnet, daß der Durchmesser der größeren Basis (36) größer ist als der Durchmesser des ringförmigen Abschnitts (26) des Klemmelements (24) im gelockerten Zustand, während der Durchmesser der kleineren Basis (38) kleiner ist als der Durchmesser des ringförmigen Abschnitts (26) des Klemmelements (24) im gelockerten Zustand.

4. Vorrichtung nach Anspruch 2 oder Anspruch 3, dadurch gekennzeichnet, daß der Zwischenabschnitt (42) des Schlauchs (16) unmittelbar angrenzend an die Nut (20) die Gestalt eines Kegelstumpfs aufweist, wobei dessen größere Basis (44) der Nut (20) zugewandt ist und einen größeren Durchmesser als der ringförmige Abschnitt (26) des Klemmelements (24) im gelockerten Zustand hat.

5. Einrichtung zur Herstellung eines Schlauchs (16), welcher einen Teil der Vorrichtung der Ansprüche 1 bis 4, die auch ein Klemmelement (24) aufweist, bildet, welche Einrichtung umfaßt:
- einen geformten Kernteil (46), um welchen der Schlauch (16) koaxial befestigt werden kann, und
- zumindest eine Form (48) zur koaxialen Positionierung um die Außenseite eines Endes (50) des vom Schlauch (16) umhüllten Kernteils (46), welche in Umkehrung (55) die gewünschte Gestalt der Außenfläche des angrenzend an zumindest einen seiner Endabschnitte (34) eine Umfangsnut (20) aufweisenden Schlauchs (16) reproduziert, wobei das Klemmelement (24) dazu gezwungen wird, auf den Endabschnitt (34) des hergestellten Schlauchs (16) dank der elastischen Verformbarkeit des letzteren zu gleiten, und in die Nut (20) eingepaßt wird, wo es festgehalten und am Heraustreten gehindert wird, da das Element (24) auch im gelockerten Zustand einen Durchmesser hat, welcher etwas kleiner ist als jener der an die Nut angrenzenden Abschnitte des Schlauchs (16), wobei die Einrichtung dadurch gekennzeichnet ist, daß aus einem ersten Ende (50a) des Kernteils (46) der Länge nach ein Griff (52) herausragt, an welchem koaxial ein erstes ringförmiges Trägerelement (54a) einer koaxial um das erste Ende (50a) des Kernteils (46) positionierten ersten rohrförmigen Form (48a) mit kreisförmigem Querschnitt fixiert ist.

6. Einrichtung nach Anspruch 5, dadurch gekennzeichnet, daß die erste Form (48a) aus einer Mehrzahl von blütenblattartigen Bestandteilen (58a) gebildet ist, welche an einem Ende am ersten ringförmigen Element (54a) angelenkt sind, wobei diese Bestandteile (58a) schwenkbar sind zwischen einer offenen Konfiguration, in welcher sie auseinandergehen und zum Kernteil (46) geneigt sind, und einer geschlossenen Konfiguration, in welcher sie Seite an Seite rund um den Kernteil (46) liegen, wobei jeder einen entsprechenden Abschnitt eines ringförmigen Körpers belegt.

7. Einrichtung nach Anspruch 5 oder Anspruch 6, dadurch gekennzeichnet, daß sie eine zweite Form (48b) zur Verbindung mit dem Ende (50b) des Kernteils (46) enthält, gegenüber jener, aus der der Griff (52) ragt, wobei die zweite Form (48b) aus einer Mehrzahl von blütenblattartigen Bestandteilen (58b) gebildet ist, welche an einem Ende an einem zweiten ringförmigen Trägerelement (54b), in welches das gegenüberliegende Ende (50b) des Kernteils (46) eingepaßt werden kann, angelenkt sind.

8. Einrichtung nach Anspruch 7, dadurch gekennzeichnet, daß am Ende des zweiten ringförmigen Trägerelements (54b), gegenüber jenem, an dem die blütenblattartigen Bestandteile (58b) angelenkt sind, ein Rahmen (60) herausragt, an welchem ein erstes Ende eines Federblatts (62) befestigt ist, wobei das andere Ende als Zunge (64) ausgebildet ist, welche über ein zentrales Loch (56) im zweiten ringförmigen Trägerelement (54b) ragt, zwecks Eingreifens in einen Schlitz (64) entsprechender Dimensionen, welcher im Ende (50b) des Kernteils (46) ausgebildet ist, der mit der zweiten Form (48b) verbunden werden kann.

9. Einrichtung nach Anspruch 8, dadurch gekennzeichnet, daß der Rahmen (60) ein Paar diametral gegenüberliegender Stangen (66) enthält, von denen jede an einem Ende am zweiten ringförmigen Element (54b) und am anderen an einem Ring (68) befestigt ist, wobei die an den Ring (68) angrenzenden Abschnitte dieser Stangen (66) durch eine Platte (70), an welcher das Blatt (62) befestigt ist, miteinander verbunden sind.

10. Einrichtung nach einem der Ansprüche 5 bis 9, dadurch gekennzeichnet, daß sie eine Lasche (72) zum Zusammenhalten der distalen Enden der blütenblattartigen Bestandteile (58) jeder Form (48) enthält.

11. Einrichtung nach Anspruch 10, dadurch gekennzeichnet, daß jede Lasche (72) wie eine zusammengedrückte Schraubenfeder mit radial herausragenden Enden zum Ermöglichen des Haltens und Lockerns/Festspannens geformt ist.

12. Einrichtung nach Anspruch 11, dadurch gekennzeichnet, daß die distalen Enden der blütenblattartigen Bestandteile (58) entsprechende Umfangsvorsprünge (74) haben, welche einen durchgehenden Haltering für die Lasche (72) bilden, wenn sich die Form (48) in ihrer geschlossenen Konfiguration befindet.

13. Verfahren zur Herstellung eines Schlauchs (16), welcher einen Teil der Vorrichtung der Ansprüche 1 bis 4, die auch ein Klemmelement (24) aufweist, bildet, dadurch gekennzeichnet, daß es folgende Schritte umfaßt:
- das koaxiale Befestigen des unbearbeiteten Schlauchs (16) um den Kernteil (46),
- das koaxiale Festklemmen einer entsprechenden Form (48) um die Außenseite zumindest eines Endes (50) des vom Schlauch (16) umhüllten Kemteils (46), wobei die Form in Umkehrung (55) die gewünschte Gestalt der Außenfläche des herzustellenden, angrenzend an zumindest einen seiner Endabschnitte (34) eine Umfangsnut (20) aufweisenden Schlauchs (16) reproduziert,
- das Plazieren der durch den Kernteil (46), den unfertigen Schlauch (16) und die Form (48) gebildeten Struktur in einen Vulkanisator, und
- das Vulkanisieren des Schlauchs (16), wobei dann das Klemmelement (24) gezwungen wird, auf den Endabschnitt (34) des Schlauchs (16) dank der elastischen Verformbarkeit des letzteren zu gleiten, und in die Nut (20) eingepaßt wird, wo es festgehalten und am Heraustreten gehindert wird, da das Element (24) auch im gelockerten Zustand einen Durchmesser hat, welcher etwas kleiner ist als jener der an die Nut angrenzenden Abschnitte des Schlauchs (16).

## Revendications

1. Dispositif de raccordement pour un circuit de fluide, en particulier pour le circuit de refroidissement d'un moteur à combustion interne (10), comprenant un tube (16) en matière élastomère et au moins un élément de serrage (24) ayant une partie annulaire (26) et ayant des moyens de serrage/desserrage (28, 30) destinés à modifier le diamètre de la partie annulaire (26), le dispositif étant caractérisé en ce que le tube (16) possède une rainure circonférentielle (20) dans sa surface extérieure adjacente à au moins une partie d'extrémité (34) et en ce que le diamètre de la partie annulaire (26) de l'élément de serrage (24), même dans son état desserré, est légèrement plus petit que celui des parties du tube (16) adjacentes à la rainure (20) dans laquelle la partie annulaire (26) de l'élément de serrage (24) peut être montée, déterminant ainsi la position axiale de l'élément de serrage (24) par rapport au tube (16).

2. Dispositif selon la revendication 1, caractérisé en ce que la partie d'extrémité (34) du tube (16) adjacente à la rainure (20) est sous la forme d'un tronc de cône avec sa grande base (36) qui fait face à la rainure (20) et sa petite base (38) formée avec l'embouchure (40) du tube (16).

3. Dispositif selon la revendication 2, caractérisé en ce que le diamètre de la grande base (36) est plus grand que le diamètre de la partie annulaire (26) de l'élément de serrage (24) dans son état desserré, alors que le diamètre de la petite base (38) est inférieur au diamètre de la partie annulaire (26) de l'élément de serrage (24) dans son état serré.

4. Dispositif selon la revendication 2 ou la revendication 3, caractérisé en ce que la partie intermédiaire (42) du tube (16) immédiatement adjacente à la rainure (20) est sous la forme d'un tronc de cône, dont la grande base (44) fait face à la rainure (20) et a un diamètre supérieur à la partie annulaire (26) de l'élément de serrage (24) dans son état desserré.

5. Appareil pour la fabrication d'un tube (16) qui forme une partie du dispositif des revendications 1 à 4 comportant également un élément de serrage (24), ledit appareil comprenant:
- un mandrin mis en forme (46) autour duquel le tube (16) peut être monté coaxialement, et
- au moins un moule (48) pour un positionnement coaxial autour de l'extérieur d'une extrémité (50) du mandrin (46) entouré par le tube (16) et qui reproduit en négatif (55) la forme souhaitée de la surface externe du tube (16), qui possède une rainure circonférentielle (20) adjacente à au moins une partie d'extrémité (34) de celui-ci, l'élément de serrage (24) étant forcé à coulisser sur la partie d'extrémité (34) du tube (16) fabriqué grâce à la capacité de déformation élastique de ce dernier, et monté dans la rainure (20) où il est maintenu et empêché de se désengager, puisque l'élément (24) a, même dans son état desserré, un diamètre légèrement inférieur à celui des parties du tube (16) adjacentes à la rainure,
ledit appareil étant caractérisé en ce que, d'une première extrémité (50a) du mandrin (46) dépasse longitudinalement une poignée (52) sur laquelle est fixé coaxialement un premier élément de support annulaire (54a) d'un premier moule tubulaire (48a) ayant une section circulaire et qui est positionné coaxialement autour de la première extrémité (50a) du mandrin (46).

6. Appareil selon la revendication 5, caractérisé en ce que le premier moule (48a) se compose de plusieurs composants en forme de pétale (58a) qui pivotent à une extrémité sur le premier élément annulaire (54a), ces composants (58a) pouvant pivoter entre une configuration ouverte, dans laquelle ils divergent et sont inclinés vers le mandrin (46) et une configuration fermée dans laquelle ils s'étendent côte à côte autour du mandrin (46), chacun occupant un secteur respectif d'un corps annulaire.

7. Appareil selon la revendication 5 ou la revendication 6, caractérisé en ce qu'il comprend un deuxième moule (48b) pour association avec l'extrémité (50b) du mandrin (46) opposée à celle de laquelle dépasse la poignée (52), le deuxième moule (48b) étant constitués de plusieurs composants en forme de pétale (58b) qui pivotent à une extrémité sur un deuxième élément de support annulaire (54b) dans lequel peut être montée ladite extrémité opposée (50b) du mandrin (46).

8. Appareil selon la revendication 7, caractérisé en ce que, à l'extrémité du deuxième élément de support annulaire (54b) opposée à celle sur laquelle pivotent les composants en forme de pétale (58b), un bâti (60) dépasse et une première extrémité d'une lame élastique (62) est fixée dessus, l'autre extrémité étant sous la forme d'une languette (64) qui dépasse d'un trou central (56) dans le deuxième élément de support annulaire (54b) pour engagement dans une fente (64) de dimensions correspondantes formée dans l'extrémité (50b) du mandrin (46) qui peut être associée au deuxième moule (48b).

9. Appareil selon la revendication 8, caractérisé en ce que le bâti (60) comprend une paire de barres diamétralement opposées (66) fixées chacune à une extrémité sur le deuxième élément annulaire (54b) et à l'autre extrémité sur une bague (68), la partie de ces barres (66) adjacente à la bague (68) étant interconnectée par une plaque (70) sur laquelle est fixée la lame (62).

10. Appareil selon l'une quelconque des revendications 5 à 9, caractérisé en ce qu'il comprend un collier (72) destiné à maintenir ensemble les extrémités distales des composants en forme de pétale (58) de chaque moule (48).

11. Appareil selon la revendication 10, caractérisé en ce que chaque collier (72) est sous la forme d'un ressort hélicoïdal aplati avec ses extrémités qui dépassent radialement de façon à permettre la saisie et le desserrage/serrage.

12. Appareil selon la revendication 11, caractérisé en ce que les extrémités distales des composants en forme de pétale (58) possèdent des saillies circonférentielles respectives (74) qui forment une bague de retenue continue pour le collier (72) lorsque le moule (48) est dans sa configuration fermée.

13. Procédé pour la fabrication d'un tube (16) qui forme une partie du dispositif des revendications 1 à 4 comportant également un élément de serrage (24), caractérisé en ce qu'il comprend les étapes consistant à:
monter coaxialement le tube brut (16) autour du mandrin (46),
serrer coaxialement un moule respectif (48) autour de l'extérieur d'au moins une extrémité (50) du mandrin (46) entouré par le tube (16), ledit moule reproduisant en négatif (55) la forme souhaitée de la surface externe du tube (16) devant être fabriqué, qui a une rainure circonférentielle (20) adjacente à au moins une partie d'extrémité (34) de celui-ci,
placer l'ensemble formé par le mandrin (46), le tube non fini (16) et le moule (48) dans un vulcaniseur, et
vulcaniser le tube (16), l'élément de serrage (24) étant alors forcé à coulisser sur la partie d'extrémité (34) du tube (16) grâce à la capacité de déformation élastique de ce dernier, et monté dans la rainure (20) où il est maintenu et empêché de se désengager, puisque l'élément (24) a, même dans son état desserré, un diamètre légèrement plus faible que celui des parties du tube (16) adjacentes à la rainure.
